# EUROPÄISCHE PATENTSCHRIFT

(11) **EP 3 013 613 B1**
(45) Veröffentlichungstag und Bekanntmachung des Hinweises auf die Patenterteilung: **28.11.2018**
(21) Anmeldenummer: 14732546.8
(22) Anmeldetag: 20.06.2014
(51) Int. Cl.: B60G 17/019, B60G 17/052, F16F 9/32, F16F 9/04, F16F 9/05, B60G 11/27

(54) **LUFTFEDER MIT IN DEN BALG INTEGRIERTER NIVEAUMESSEINRICHTUNG**
AIR SPRING WITH LEVEL MEASURING DEVICE INTEGRATED IN THE BELLOWS
RESSORT A L'AIR AVEC DISPOSITIF DE MESURE DE NIVEAU INTÉGRÉ DANS LE SOUFFLET

(30) Priorität: 26.06.2013 DE 102013106703
(43) Veröffentlichungstag der Anmeldung: 04.05.2016
(73) Patentinhaber: KNORR-BREMSE Systeme für Nutzfahrzeuge GmbH, 80809 München (DE)
(72) Erfinder: PRAMS, Stefan, 80637 München (DE)
(86) Internationale Anmeldenummer: PCT/EP2014/062994
(87) Internationale Veröffentlichungsnummer: WO 2014/206871

(56) Entgegenhaltungen:
- DE-A1- 4 035 784
- DE-A1- 19 803 750
- DE-A1-102008 028 916
- DE-A1-102008 028 917
- DE-C1- 10 017 562
- US-A1- 2005 077 691

## Beschreibung

Die Erfindung betrifft eine Luftfeder mit einem Deckel, einem Bodenelement und mit einem dazwischen druckdicht eingespannten flexiblen Balg sowie mit einer zumindest teilweise in den Balg integrierten Niveaumesseinrichtung zum Erfassen des Höhenniveaus der Luftfeder, gemäß dem Oberbegriff von Anspruch 1.

Um bei Fahrzeugen mit Luftfedereinrichtung und Luftfedern bei unterschiedlichen Beladungszuständen ein gleiches Soll-Niveau des Aufbaus zu gewährleisten, ist eine Regelung des Niveaus des Aufbaus vorhanden. Hierzu ist die Kenntnis des Ist-Niveaus des Aufbaus bzw. des Höhenniveaus der zwischen dem Aufbau und den Achsen angeordneten Luftfedern notwendig, wobei wegen einer gewissen Unempfindlichkeit gegenüber äußeren Bedingungen und Montagefreundlichkeit aus dem Stand der Technik in den Luftbalg integrierte Niveaumesseinrichtungen bekannt sind.

So schlägt die DE 10 2008 028 916 B4 eine Vorrichtung zum Erfassen eines Balgniveaus vor, bei welcher im Inneren des Luftbalgs ein Taster angeordnet ist, welcher die Position einer am Luftbalg außen ausgebildeten Rollfalte des Luftbalgs tastet und ein positionsabhängiges Signal aussteuert. Nachteilig dabei ist, dass sich die Ausbildung der Rollfalte nicht unbedingt linear mit der Einfederung verhält und dass wegen der äußeren Abtastung der Rollfalte Dichtigkeitsprobleme am Luftbalg auftreten können.

Gemäß DE100 17 562 C1 wird ein in den Luftbalg integrierter Höhensensor vorgeschlagen, der eine längenveränderliche Wendelung und eine Spule aufweist. An die Spule wird eine Wechselspannung angelegt, was aufgrund des dadurch erzeugten Magnetfeldes in der Wendelung ebenfalls zu einer induzierten elektrischen Spannung führt, welche in einer Auswerteeinheit ausgewertet ein maß für den Abstand des Deckels vom Kolben bildet.

Bei der DE 10 2008 028 917 B4 wird eine Einrichtung zum Erfassen einer dynamischen Druckänderung in der Luftfeder während einer Einfederung vorgeschlagen, wobei das Höhenniveau abhängig von dem statischen Druck und der dynamischen Druckänderung bestimmt wird.

Nach DE 40 35 784 A1 werden in der Wandung des Luftfederbalgs einer Luftfeder spulenförmige leitfähige Leiterbahnen vorgeschlagen. Dabei wird bei einer Einfederung eine Änderung der Induktivität dieser spulenförmigen Leiterbahnen elektronisch ausgewertet und daraus die Einfederung bestimmt.

Die oben genannten Ansätze weisen jedoch gegenüber den Rahmenbedingungen wie stark wechselnde Temperaturen, öl- und partikelhaltige Umgebung, Druckschwankungen, enger Bauraum, Reproduzierbarkeit etc. Nachteile auf.

US2005/077691A1 offenbart eine am Deckel einer Luftfeder angeordnete Spuleneinrichtung mit einer Spule, auf welche ein nicht starres Seil infolge einer in Aufrollrichtung wirkenden Federvorspannung aufrollbar ist. Das Ende des Seils ist an einem Boden der Luftfeder befestigt. Die Funktion einer solchen Spuleneinrichtung hängt jedoch stark von der Zuverlässigkeit der Federvorspannung ab, welche bei z.B. gebrochener oder in ihrer Wirkung nachlassenden Feder nicht mehr gewährleistet werden kann.

Der Erfindung liegt demgegenüber die Aufgabe zugrunde, eine Luftfeder mit einer zumindest teilweise in den Balg integrierten Niveaumesseinrichtung zur Verfügung zu stellen, dass auf möglichst einfache und robuste Art eine genaue Messung des Höhenniveaus erfolgen kann.

Diese Aufgabe wird erfindungsgemäß durch die Merkmale von Anspruch 1 gelöst.

### Offenbarung der Erfindung

Die Niveaumesseinrichtung weist erfindungsgemäß Folgendes auf:
- Wenigstens einen in den Balg integrierten, mit dem Deckel oder mit dem Bodenelement zumindest drehfest verbundenen Winkelsensor, welcher ein in Bezug zu einer Basis starres drehbares Element aufweist,
- eine einerseits mit dem starren drehbaren Element des Winkelsensors und andererseits mit dem Deckel oder mit dem Bodenelement verbundene mechanische Koppelung; derart, dass mit einer Änderung des Höhenniveaus der Luftfeder ein Winkel wenigstens eines Elements der mechanischen Koppelung verändert wird und der Winkelsensor ein von der Winkeländerung des Elements abhängiges Winkelsignal erzeugt,
- eine Auswerteeinrichtung, durch welche das vom Winkelsensor stammende Winkelsignal einem Höhenniveau der Luftfeder zugeordnet wird.

Mit anderen Worten wird eine Veränderung der vertikalen Niveaulage zwischen dem Deckel und dem Bodenelement durch die Kinematik der mechanischen Koppelung zwischen dem Drehwinkelsensor und dem Deckel bzw. Bodenelement in eine Änderung der Winkellage des starren drehbaren Elements des Winkelsensors umgesetzt, so dass die jeweils eingenommene Winkellage des starren drehbaren Elements ein Maß für die Ein- bzw. Ausfederung bzw. für die Längenänderung der Luftfeder bildet.

Die zumindest drehfeste Verbindung des Winkelsensors mit dem Deckel oder mit dem Bodenelement besitzt ihre Drehfestigkeit daher in Bezug zu einer Drehachse des starren drehbaren Elements des Drehwinkelsensors.

Eine solche, durch eine mechanische Koppelung zwischen dem Drehwinkelsensor und dem Deckel oder dem Bodenelement vorgenommene Bestimmung des Höhenniveaus ist robust als sie beispielsweise gegenüber Temperaturänderungen relativ unempfindlich ist. Auch ist eine gewisse Unempfindlichkeit gegenüber einer Öl oder Partikel enthaltenden Umgebung gegeben. Entscheidend ist jedoch, dass jedem ermittelten Dreh- oder Schwenkwinkel des starren drehbaren Elements des Winkelsensors ein eindeutiges Höhenniveau der Luftfeder zugeordnet werden kann.

Im Sinne der Erfindung kann der Begriff "Höhenniveau" als Abstand des Deckels von einer gegenüber liegenden Fläche des Bodenelements der Luftfeder (z.B. Kolbenfläche eines Kolbens) oder auch als Länge der Luftfeder gesehen in Richtung einer vertikalen Mittelachse der Luftfeder oder aber auch als Abstand einer Achse eines Fahrzeugs vom Aufbau verstanden werden, je nachdem, welche der genannten Größen für die weitere Verwendung z.B. im Rahmen eines Niveau-Regelalgorithmus geeigneter erscheint.

Die Auswerteeinrichtung kann dabei innerhalb der Luftfeder bzw. innerhalb des Balgs oder außerhalb davon angeordnet sein.

Durch die in den Unteransprüchen aufgeführten Maßnahmen sind vorteilhafte Weiterbildungen und Verbesserungen der in Anspruch 1 angegebenen Erfindung möglich.

Gemäß einer bevorzugten Ausführungsform beinhaltet die mechanische Koppelung wenigstens ein mit seinem einen Ende in einer Führung am Bodenelement oder am Deckel verschieblich geführtes und mit seinem anderen Ende mit dem Drehelement des Winkelsensors verbundenes Element, derart, dass sich mit einer Änderung des Höhenniveaus der Luftfeder das eine Ende des Elements entlang der Führung bewegt und das andere Ende das starre drehbare Element des Winkelsensors betätigt. Dabei kann die Führung eine in einer Ebene senkrecht zu einer Mittelachse der Luftfeder angeordnete, lineare Längsführung sein.

Diese Ausführungsform ist vorteilhaft hinsichtlich seiner Robustheit, weil es mit nur einem einzigen stabförmigen Element auf sehr einfache Weise realisiert werden kann, insbesondere, wenn die Führung eine Gleitführung ist.

Gemäß einer weiteren Ausführungsform beinhaltet die mechanische Koppelung einen Scherenmechanismus mit wenigstens zwei miteinander gelenkig verbundenen Scherenelementen, wobei ein Ende eines ersten Scherenelements mit dem starren drehbaren Element des Winkelsensors verbunden und ein Ende eines zweiten Scherenelements über eine Anlenkung am Bodenelement oder am Deckel angelenkt ist, derart, dass bei einer Änderung des Höhenniveaus der Luftfeder sich der Scherenmechanismus in Richtung der Mittelachse der Luftfeder verlängert oder verkürzt und das zweite Scherenelement um die Anlenkung dreht und das erste Scherenelement das starre drehbare Element des Winkelsensors betätigt. Dabei kann der Scherenmechanismus sich überkreuzende und/oder sich nicht überkreuzende Scherenelemente beinhalten.

Gemäß einer weiteren Ausführungsform beinhaltet die mechanische Koppelung eine mit ihrem einen Ende am Deckel oder am Bodenelement mittels einer Anlenkung angelenkte und mit ihrem anderen Ende mit dem starren drehbaren Element des Winkelsensors verbundene Teleskopiereinrichtung, derart, dass bei einer Änderung des Höhenniveaus der Luftfeder unter Verlängerung oder Verkürzung der Telekopiereinrichtung das eine Ende um die Anlenkung dreht und das andere Ende das starre drehbare Element des Winkelsensors betätigt. Dabei kann die Teleskopiereinrichtung wenigstens zwei in einem Längsfreiheitsgrad relativ zueinander verschiebbare Teleskopierelemente beinhalten.

Der Vorteil dieser Ausführungsform liegt wiederum in der Einfachheit ihres Aufbaus mit minimal nur zwei in- oder aneinander verschiebbaren Teleskopierelementen und nur einer Anlenkung am Deckel oder am Bodenelement.

Besonders vorteilhaft ist die Auswerteeinrichtung in den Balg integriert und am Deckel angeordnet. Dann ist auch die Auswerteeinrichtung gegen äußere Einflüsse wie Schmutz und Feuchtigkeit geschützt untergebracht. Weiterhin bildet dann die Luftfeder zusammen mit der zugeordneten Niveaumesseinrichtung eine einbaufertige, leicht montierbare Einheit.

Die Lage des Winkelsensors im Inneren des Balgs ist beliebig und kann an die Gegebenheiten der mechanischen Kopplung angepasst werden. Insbesondere ist der der Winkelsensor zentrisch oder exzentrisch in Bezug zu einer Mittelachse der Luftfeder angeordnet.

Das starre drehbare Element des Winkelsensors kann berührungslos oder durch Berührung mit der Basis zusammenwirken. Ein Beispiel für ein Zusammenwirken des starren drehbaren Elements mit der Basis durch Berührung bildet ein Drehpotentiometer, bei welchem das starre drehbare Element aus einem mit einer Leiterbahn zusammen wirkenden Drehschieber besteht und bei welchem sich der elektrische Widerstand mit dem Drehwinkel messbar ändert. Beispiele von einem berührungslosen Zusammenwirken des starren drehbaren Elements mit der Basis sind Hall-Element, induktiver Drehwinkelsensor und Drehwinkelsensor nach dem inkrementellen Durchlichtverfahren.

Gemäß einer Weiterbildung kann die Drehachse des starren drehbaren Elements des Drehwinkelsensors senkrecht zu einer Ebene angeordnet sein, welche die Mittelachse der Luftfeder enthält.

Die Erfindung betrifft auch eine Luftfederungseinrichtung für ein Fahrzeug beinhaltend wenigstens eine oben beschriebene Luftfeder.

Bei einer solchen Luftfederungseinrichtung für ein Fahrzeug ist dann auch eine Ventilanordnung vorgesehen, durch welche abhängig von dem ermittelten Höhenniveau der wenigstens einen Luftfeder eine Druckmittelzu- oder Abfuhr zu dem oder von dem Balg der Luftfeder erfolgt, um ein vorgegebenes Soll-Niveau einzuregeln. Diese Ventilanordnung wird dann von einer elektronischen Niveauregelung gesteuert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen. Identische bzw. gleich wirkende Bauteile und Baugruppen sind in unterschiedlichen Ausführungsformen jeweils mit denselben Bezugszahlen bezeichnet.

### Zeichnung

In der Zeichnung zeigt
- Fig.1: eine schematische Darstellung einer Ausführungsform einer Luftfeder gemäß der Erfindung;
- Fig.2: eine schematische Darstellung einer weiteren Ausführungsform einer Luftfeder gemäß der Erfindung;
- Fig.3: eine schematische Darstellung einer weiteren Ausführungsform einer Luftfeder gemäß der Erfindung;
- Fig.4: eine schematische Darstellung einer bevorzugten Ausführungsform einer Luftfeder gemäß der Erfindung;
- Fig.5a bis 5c: eine schematische Darstellung einer weiteren bevorzugten Ausführungsform einer Luftfeder gemäß der Erfindung in verschiedenen Einfederungspositionen .

### Beschreibung der Ausführungsbeispiele

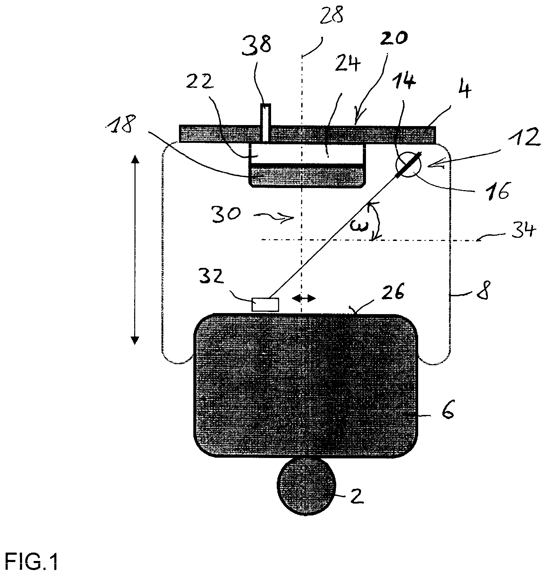

Die in Fig.1 gezeigte Ausführungsform einer Luftfeder 1 ist eine von mehreren Luftfedern einer Luftfederungseinrichtung eines Fahrzeugs und zwischen einer Achse 2 und einem hier nicht gezeigten Aufbau des Fahrzeugs angeordnet. Bei einer solchen Luftfederungseinrichtung erfolgt abhängig von einem ermittelten Höhenniveau der Luftfeder 1 eine Druckmittelzu- oder Abfuhr zu der oder von der Luftfeder 1, um ein vorgegebenes Soll-Niveau einzuregeln.

Die Luftfeder 1 umfasst einen beispielsweise mit dem Aufbau verbundenen Deckel 4, ein mit der Achse 2 verbundenes Bodenelement z.B. in Form eines Kolbens 6 oder einer Bodenplatte sowie mit einen dazwischen druckdicht eingespannten flexiblen Balg 8. In Gebrauchslage der Luftfeder 1 sind der Deckel 4 oben und der Kolben 6 unten angeordnet. Bei einer Einfederung der Luftfeder 1 nimmt der vertikale Abstand bzw. das Höhenniveau zwischen dem Deckel 4 und dem Kolben 6 ab und bei Ausfederung zu.

Die Luftfeder 1 weist außerdem eine hier bevorzugt vollständig in den Balg 8 integrierte Niveaumesseinrichtung 10 zum Erfassen des Höhenniveaus der Luftfeder 1 auf. Die Niveaumesseinrichtung 10 beinhaltet zum einen einen Drehwinkelsensor 12 mit einem Drehelement 14 und einer Basis 16, gegenüber welcher das Drehelement 14 verdrehbar ist, wobei abhängig von dem gerade eingestellten Drehwinkel ω des Drehelements 14 gegenüber der Basis 16 ein Drehwinkelsignal erzeugt und in eine Auswerteeinrichtung 18 eingesteuert wird, welche hier bevorzugt im Inneren des Balgs 8 und am Deckel 4 der Luftfeder 1 in einer Einheit 20 angeordnet ist, welche auch einen Drucksensor 22 zur Messung des Innendrucks im Balg sowie ein elektronisches Steuergerät 24 aufnimmt. Hierzu ist wenigstens eine elektrische Durchführung 38 im Deckel zur Durchführung von elektrischen Leitungen vorhanden. Die Auswerteeinrichtung 18 ordnet dann das vom Drehwinkelsensor 12 stammende Winkelsignal einem Höhenniveau der Luftfeder 1 zu. Bevorzugt ist der Drehwinkelsensor 12 hier mit dem Deckel 4 der Luftfeder 1 fest verbunden. Anstatt innerhalb des Balgs 8 bzw. innerhalb der Luftfeder 1 kann die Auswerteeinrichtung 18 auch außerhalb davon angeordnet sein.

Dabei kann der Begriff "Höhenniveau" als Abstand des Deckels 4 von einer gegenüber liegenden Kolbenfläche 26 des Kolbens 6 der Luftfeder 1 oder auch als Länge der Luftfeder 1. gesehen in Richtung einer vertikalen Mittelachse 28 der Luftfeder 1 oder aber auch als Abstand der Achse 2 des Fahrzeugs vom Aufbau verstanden werden, je nachdem, welche der genannten Größen für die weitere Verwendung z.B. im Rahmen eines Niveau-Regelalgorithmus geeigneter erscheint.

Hier ist der Drehwinkelsensor 12 exzentrisch in Bezug zur Mittelachse 28 der Luftfeder 1 angeordnet. Alternativ könnte der Drehwinkelsensor 12 auch zentrisch angeordnet sein. Das Drehelement 14 des Drehwinkelsensors 12 kann berührungslos oder durch Berührung mit der Basis 16 zusammenwirken. Hier besteht der Drehwinkelsensor 12 bevorzugt in einem Drehpotentiometer, bei dem das Drehelement 14 aus einem mit einer Leiterbahn der Basis 16 zusammen wirkenden Drehschieber besteht und bei welchem sich der elektrische Widerstand mit dem Drehwinkel ω messbar ändert. Alternativ kann auch ein Drehwinkelsensor 12 mit einem berührungslosen Zusammenwirken des Drehelements 14 mit der Basis 16 vorgesehen werden, wie z.B. ein Hall-Element, ein induktiver Drehwinkelsensor oder ein Drehwinkelsensor nach dem inkrementellen Durchlichtverfahren. Die Drehachse des Drehelements 14 des Drehwinkelsensors 12 ist hier bevorzugt senkrecht zu einer vertikalen Mittelebene der Luftfeder 1 angeordnet, welche die Mittelachse 28 der Luftfeder enthält.

In dem Balg 8 ist weiterhin eine einerseits mit dem Drehelement 14 des Drehwinkelsensors 12 und andererseits mit einer gegenüber liegenden Kolbenfläche 26 des Kolbens 6 zusammen wirkende mechanische Koppelung 30 der Niveaumesseinrichtung 10 vorgesehen, um eine lineare Relativbewegung zwischen dem Deckel 4 und dem Kolben 6 in eine Drehbewegung des Drehelements 14 des Drehwinkelsensors 12 zu wandeln. Mit anderen Worten soll mit einer Änderung des Höhenniveaus der Luftfeder 1 ein Winkel wenigstens eines Elements der mechanischen Koppelung 30 verändert werden und der Drehwinkelsensor 12 ein von der Winkeländerung des Elements abhängiges Winkelsignal erzeugen. In Bezug auf die mechanische Kopplung 30 werden im Folgenden verschiedene Ausführungsformen beschrieben.

Bei der in Fig.1 gezeigten bevorzugten Ausführungsform besteht die mechanische Koppelung 30 aus einem mit seinem einen Ende in einer hier beispielsweise linearen Führung 32 an der dem Deckel 4 gegenüberliegende Kolbenfläche 26 des Kolbens 6 verschieblich geführten und mit seinem anderen Ende mit dem Drehelement 14 des Drehwinkelsensors 12 verbundenen stabförmigen Element. Mit einer Änderung des Höhenniveaus der Luftfeder 1, beispielsweise bedingt durch eine Laständerung oder eine Zu- oder Abfuhr von Druckluft, bewegt sich dann das eine Ende des Stabelements 30 entlang der Führung 32, wie durch den Doppelpfeil in Fig.1 angedeutet ist und das andere Ende betätigt das Drehelement 14 des Drehwinkelsensors 12. Dann ändert sich der hier beispielsweise relativ zur Horizontalen 34 gemessene Drehwinkel ω. Die lineare Führung 32 für das eine Ende des Stabelements 30 ist dabei bevorzugt in einer Ebene senkrecht zur Mittelachse 28 der Luftfeder 1 angeordnet.

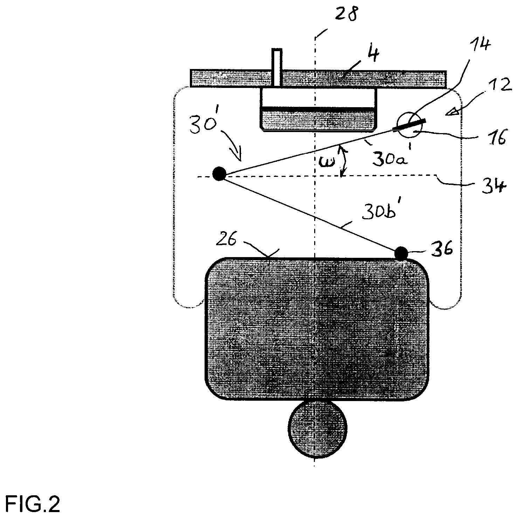

Bei der Ausführungsform von Fig.2 besteht die mechanische Koppelung aus einem Scherenmechanismus 30' mit beispielsweise zwei miteinander gelenkig verbundenen und sich beispielsweise nicht überkreuzenden Scherenelementen 30a', 30b', wobei ein Ende eines ersten Scherenelements 30a' mit dem Drehelement 14 des Drehwinkelsensors 12 und ein zweites Scherenelement 30b' über eine Anlenkung 36 an der dem Deckel 4 gegenüberliegenden Kolbenfläche 26 des Kolbens 6 angelenkt ist. Andererseits sind die beiden Scherenelemente 30a', 30b' mit ihren jeweils anderen Enden miteinander gelenkig verbunden, wobei die Drehachsen aller Gelenke parallel zueinander sind. Bei einer Änderung des Höhenniveaus der Luftfeder 1 verlängert oder verkürzt sich dann der Scherenmechanismus 30' in Richtung der Mittelachse 28 der Luftfeder 1, wobei das zweite Scherenelement 30b' um die Anlenkung 36 dreht und das erste Scherenelement 30a' das Drehelement 14 des Drehwinkelsensors 12 betätigt, um den Drehwinkel ω zu verändern. Da hier vorzugsweise keine teleskopierbaren Scherenelemente 30a', 30b' vorgesehen sind, welche Verspannungen des Scherenmechanismus 30' ausgleichen könnten, ist der Federungsbereich der Luftfeder 1 beschränkt.

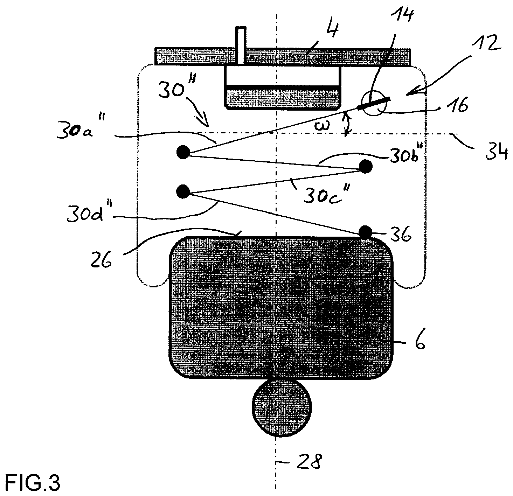

Bei der Ausführungsform von Fig.3 besteht der Scherenmechanismus 30'' aus vier beispielsweise sich nicht überkreuzenden Scherenelementen30a'', 30b'', 30c'' und 30d''. Ein Ende eines ersten Scherenelements 30a'' ist mit dem Drehelement 14 des Drehwinkelsensors 12 verbunden und ein Ende eines vierten Scherenelements 30d'' ist an der dem Deckel 4 gegenüber liegenden Kolbenfläche 26 des Kolbens 6 durch eine Anlenkung 36 angelenkt. Die vier Scherenelemente 30a'', 30b'', 30c'' und 30d' sind außerdem jeweils durch ein Gelenk miteinander gelenkig gekoppelt, so dass bei einer Änderung des Höhenniveaus der Luftfeder 1 sich die Scherenmechanik 30" dann in Richtung der Mittelachse 28 der Luftfeder 1 verlängert oder verkürzt. Dabei dreht das vierte Scherenelement 30d" um die Anlenkung 36 und das erste Scherenelement 30a" betätigt drehend das Drehelement 14 des Drehwinkelsensors 12, um den Drehwinkel ω zu verändern.

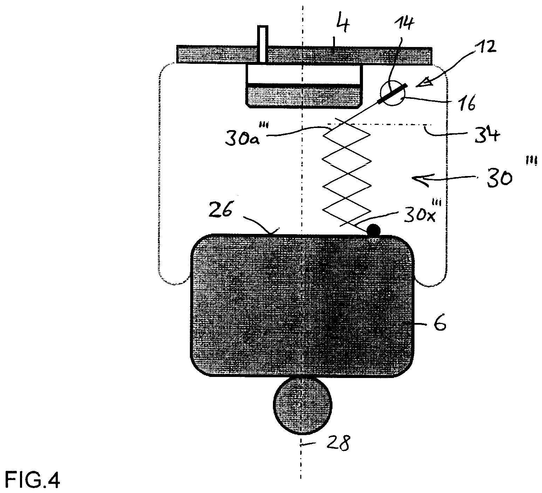

Bei der Ausführungsform von Fig.4 besteht der Scherenmechanismus 30'" aus einer Mehrzahl von sich überkreuzenden Scherenelementen, welche zum einen mittig und zum andern endseitig aneinander angelenkt sind. Wiederum ist ein Ende eines ersten Scherenelements 30a'" mit dem Drehelement 14 des Drehwinkelsensors 12 verbunden und ein Ende des letzten Scherenelements 30x'" ist an der dem Deckel 4 gegenüber liegenden Kolbenfläche 26 des Kolbens 6 durch eine Anlenkung 36 angelenkt. Bei einer Änderung des Höhenniveaus der Luftfeder 1 verlängert oder verkürzt sich der Scherenmechanismus 30'" dann in Richtung der Mittelachse 28 der Luftfeder. Dabei dreht das letzte Scherenelement 30x''' um die Anlenkung am Kolben 6 und das erste Scherenelement 30a'" betätigt drehend das Drehelement 14 des Drehwinkelsensors 12, um den Drehwinkel ω zu verändern.

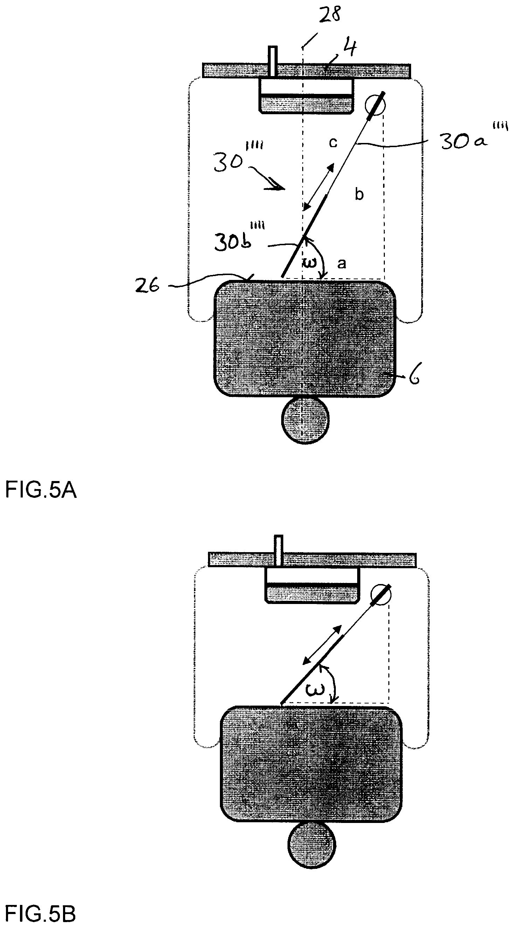

Im Unterschied zu den vorangehend beschriebenen Ausführungsformen ist bei der in den Figuren 5A bis 5C gezeigten Ausführungsform beinhaltet die mechanische Koppelung eine mit ihrem einen Ende an der dem Deckel 4 gegenüberliegenden Kolbenfläche 26 des Kolbens 6 mittels einer Anlenkung 36 angelenkte und mit ihrem anderen Ende mit dem Drehelement 14 des Drehwinkelsensors 12 verbundene Teleskopiereinrichtung 30''''. Diese Telekopiereinrichtung 30'''' beinhaltet hier beispielsweise zwei in einem Längsfreiheitsgrad relativ zueinander verschiebbare Teleskopierelemente 30a'''' und 30b'''', wie durch den Doppelpfeil angedeutet ist. Dabei ist ein erstes Telekopierelement 30a'''' mit dem Drehelement 14 des Drehwinkelsensors 12 und das zweite Telekopierelement 30b'''' über die Anlenkung 36 mit dem Kolben 6 verbunden. Bei einer Änderung des Höhenniveaus der Luftfeder 1 unter Verlängerung oder Verkürzung der Telekopiereinrichtung 30'''' dreht dann das freie Ende des zweiten Teleskopierelements 30b'''' um die Anlenkung 36 und das freie Ende des ersten Telekopierelements 30a'''' betätigt das Drehelement 14 des Drehwinkelsensors 12, um den Winkel ω zu verändern.

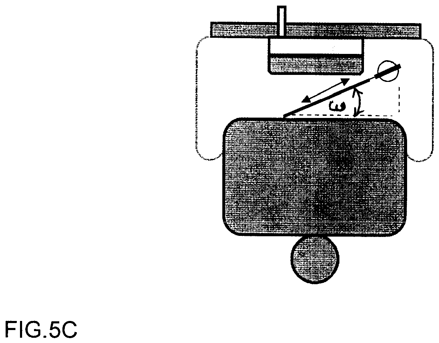

Dabei zeigt Fig.5A eine Ausgangslage zwischen Deckel 4 und Kolben 6 der Luftfeder 1, Fig.5B eine Lage, in welcher der Abstand zwischen Deckel 4 und Kolben 6 verringert und Fig.5C eine Situation, in welcher der Abstand zwischen Deckel 4 und Kolben 6 noch weiter verringert ist. Im Zuge der damit einhergehenden Verringerung des Höhenniveaus der Luftfeder, welches in den Figuren 5A bis 5C durch den Buchstaben b symbolisiert wird, verringert sich die Länge c der Teleskopiereinrichtung 30"" und das Maß a als Projektion der Länge c auf den Kolben 6 bzw. auf die Kolbenfläche 26 nimmt zu.

Es ist klar, dass der Drehwinkelsensor 12 anstatt mit dem Deckel 4 auch mit dem Kolben 6 verbunden sein kann und dass die Führung 32 bzw. die Anlenkung 36 für die mechanische Kopplung 30 dann mit dem Deckel 4 verbunden ist. Auch kann die Auswerteeinrichtung 18 außerhalb des Balgs 8 angeordnet sein, wobei dann elektrische Leitungen zwischen dem Drehwinkelsensor 12 und der Auswerteeinrichtung 18 durch die beispielsweise am Deckel 4 ausgeführte Durchführung 38 gezogen werden müssen.

### Bezugszeichenliste

- 1: Luftfeder
- 2: Achse
- 4: Deckel
- 6: Kolben
- 8: Balg
- 10: Niveaumesseinrichtung
- 12: Drehwinkelsensor
- 14: Drehelement
- 16: Basis
- 18: Auswerteeinrichtung
- 20: Einheit
- 22: Drucksensor
- 24: elektronisches Steuergerät
- 26: Kolbenfläche
- 28: Mittelachse
- 30: mechanische Kopplung
- 32: Führung
- 34: Horiziontale
- 36: Anlenkung
- 38: Durchführung

## Patentansprüche

1. Luftfeder (1) mit einem Deckel (4), einem Bodenelement (6) und mit einem dazwischen druckdicht eingespannten flexiblen Balg (8) sowie mit einer zumindest teilweise in den Balg (8) integrierten Niveaumesseinrichtung (10) zum Erfassen des Höhenniveaus der Luftfeder (1), wobei die Niveaumesseinrichtung (10) wenigstens Folgendes aufweist:
a) Wenigstens einen in den Balg (8) integrierten, mit dem Deckel (4) oder mit dem Bodenelement (6) zumindest drehfest verbundenen Winkelsensor (12), welcher ein in Bezug zu einer Basis (16) drehbares Element (14) aufweist,
b) eine einerseits mit dem drehbaren Element (14) des Winkelsensors (12) und andererseits mit dem Deckel (4) oder mit dem Bodenelement (6) verbundene mechanische Koppelung (30, 30', 30", 30"', 30""), derart, dass mit einer Änderung des Höhenniveaus der Luftfeder (1) ein Winkel (ω) wenigstens eines Elements (30; 30a'; 30a"; 30a'"; 30a"") der mechanischen Koppelung (30, 30', 30", 30"', 30"") verändert wird und der Winkelsensor (12) ein von der Winkeländerung des Elements (30; 30a'; 30a"; 30a'"; 30a"") abhängiges Winkelsignal erzeugt,
c) eine Auswerteeinrichtung (18), durch welche das vom Winkelsensor (12) stammende Winkelsignal einem Höhenniveau der Luftfeder (1) zugeordnet wird.

2. Luftfeder nach Anspruch 1, **dadurch gekennzeichnet, dass** die mechanische Koppelung wenigstens ein mit seinem einen Ende in einer Führung (32) am Bodenelement (6) oder am Deckel (4) verschieblich geführtes und mit seinem anderen Ende mit dem Drehelement (14) des Winkelsensors (12) verbundenes Element (30) beinhaltet, derart, dass mit einer Änderung des Höhenniveaus der Luftfeder (1) sich das eine Ende des Elements (30) entlang der Führung (32) bewegt und das andere Ende des Elements (30) das Drehelement (14) des Winkelsensors (12) betätigt.

3. Luftfeder nach Anspruch 2, **dadurch gekennzeichnet, dass** die Führung (32) eine in einer Ebene senkrecht zu einer Mittelachse (28) der Luftfeder (1) angeordnete, lineare Längsführung ist.

4. Luftfeder nach Anspruch 1, **dadurch gekennzeichnet, dass** die mechanische Koppelung einen Scherenmechanismus (30'; 30''; 30'''), mit wenigstens zwei miteinander gelenkig verbundenen Scherenelementen (30a', 30b'; 30a" bis 30d"; 30a'" bis 30x'") beinhaltet, wobei ein Ende eines ersten Scherenelements (30a'; 30a"; 30a") mit dem Drehelement (14) des Winkelsensors (12) verbunden und ein Ende eines zweiten Scherenelements (30b'; 30d"; 30x'") über eine Anlenkung (36) am Bodenelement (6) oder am Deckel (4) angelenkt ist, derart, dass bei einer Änderung des Höhenniveaus der Luftfeder (1) sich der Scherenmechanismus (30'; 30"; 30'") in Richtung der Mittelachse (28) der Luftfeder (1) gesehen verlängert oder verkürzt und das zweite Scherenelement (30b'; 30d"; 30x'") um die Anlenkung (36) dreht und das erste Scherenelement (30a'; 30a"; 30a") das Drehelement (14) des Winkelsensors (12) betätigt.

5. Luftfeder nach Anspruch 4, **dadurch gekennzeichnet, dass** der Scherenmechanismus (30'; 30"; 30'") sich überkreuzende und/oder sich nicht überkreuzende Scherenelemente beinhaltet.

6. Luftfeder nach einem der vorhergehenden Ansprüche, **dadurch gekennzeichnet, dass** die mechanische Koppelung eine mit ihrem einen Ende am Deckel (4) oder am Bodenelement (6) mittels einer Anlenkung (36) angelenkte und mit ihrem anderen Ende mit dem Drehelement (14) des Winkelsensors (12) verbundene Teleskopiereinrichtung (30"") beinhaltet, derart, dass bei einer Änderung des Höhenniveaus der Luftfeder (1) unter Verlängerung oder Verkürzung der Telekopiereinrichtung (30"") das eine Ende um die Anlenkung (36) dreht und das andere Ende das Drehelement (14) des Winkelsensors (12) drehend betätigt.

7. Luftfeder nach Anspruch 6, **dadurch gekennzeichnet, dass** die Teleskopiereinrichtung (30'''') wenigstens zwei in einem Längsfreiheitsgrad relativ zueinander verschiebbare Elemente (30a"", 30b"") beinhaltet.

8. Luftfeder nach einem der vorhergehenden Ansprüche, **dadurch gekennzeichnet, dass** die Auswerteeinrichtung (18) in den Balg (8) integriert und am Deckel (6) angeordnet ist.

9. Luftfeder nach einem der vorhergehenden Ansprüche, **dadurch gekennzeichnet, dass** der Winkelsensor (12) zentrisch oder exzentrisch in Bezug zur Mittelachse (28) der Luftfeder (1) angeordnet ist.

10. Luftfeder nach einem der vorhergehenden Ansprüche, **dadurch gekennzeichnet, dass** das Drehelement (14) des Winkelsensors (12) berührungslos oder durch Berührung mit der Basis (16) zusammenwirkt.

11. Luftfeder nach einem der vorhergehenden Ansprüche, **dadurch gekennzeichnet, dass** die Drehachse des Drehelements (14) des Drehwinkelsensors (12) senkrecht zu einer Mittelebene angeordnet ist, welche die Mittelachse (28) der Luftfeder (1) enthält.

12. Luftfederungseinrichtung für ein Fahrzeug beinhaltend wenigstens eine Luftfeder (1) nach einem der vorhergehenden Ansprüche.

## Claims

1. Air spring (1) having a cover (4), a base element (6) and having flexible bellows (8) which are clamped in a pressure-tight fashion between the latter, and having a level-measuring device (10) which is integrated at least partially into the bellows (8) and has the purpose of sensing the level of the air spring (1) **wherein** the level-measuring device (10) has at least the following:
a) at least one angle sensor (12) which is integrated into the bellows (8) and which is connected at least in a rotationally fixed fashion to the cover (4) or to the base element (6) and has an element (14) which can rotate with respect to a base (16),
b) a mechanical coupling (30, 30', 30'', 3''', 30'''') which is connected, on the one hand, to the rotatable element (14) of the angle sensor (12) and, on the other hand, to the cover (4) or to the base element (6) in such a way that when the level of the air spring (1) changes, an angle (ω) of at least one element (30; 30a'; 30a"; 30a"'; 30a"") of the mechanical coupling (30, 30', 30'', 30''', 30'''') is changed, and the angle sensor (12) generates an angle signal which is dependent on the change in angle of the element (30; 30a'; 30a''; 30a'''; 30a''''),
c) an evaluation device (18) by which the angle signal which originates from the angle sensor (12) is assigned to a level of the air spring (1).

2. Air spring according to Claim 1, **characterised in that** the mechanical coupling contains at least one element (30) which is guided in a sliding fashion by one of its ends in a guide (32) on the base element (6) or on the cover (4) and is connected by its other end to the rotational element (14) of the angle sensor (12), in such a way that when the level of the air spring (1) changes, the one end of the element (30) is moved along the guide (32), and the other end of the element (30) activates the rotational element (14) of the angle sensor (12).

3. Air spring according to Claim 2, **characterised in that** the guide (32) is a linear longitudinal guide which is arranged in a plane perpendicular to a central axis (28) of the air spring (1).

4. Air spring according to Claim 1, **characterised in that** the mechanical coupling contains a scissor mechanism (30'; 30"; 30"'), with at least two scissor elements (30a', 30b'; 30a" to 30d"; 30a'" to 30x"') which are connected to one another in an articulated fashion, wherein one end of a first scissor element (30a'; 30a"; 30a") is connected to the rotational element (14) of the angle sensor (12), and one end of a second scissor element (30b', 30d", 30x"') is coupled via a linkage (36) to the base element (6) or to the cover (4) in such a way that when the level of the air spring (1) changes, the scissor mechanism (30'; 30''; 30''') lengthens or shortens when viewed in the direction of the central axis (28) of the air spring (1), and the second scissor element (30b'; 30d"; 30x"') rotates about the linkage (36), and the first scissor element (30a'; 30a"; 30a") activates the rotational element (14) of the angle sensor (12).

5. Air spring according to Claim 4, **characterised in that** the scissor mechanism (30'; 30"; 30'") contains intersecting and/or non-intersecting scissor elements.

6. Air spring according to one of the preceding claims, **characterised in that** the mechanical coupling contains a telescopic device (30"") which is coupled by one of its ends to the cover (4) or to the base element (6) by means of a linkage (36) and is connected by its other end to the rotational element (14) of the angle sensor (12) in such a way that when the level of the air spring (1) changes with lengthening or shortening of the telescopic device (30''''), the one end rotates about the linkage (36) and the other end activates the rotational element (14) of the angle sensor (12) in a rotating fashion.

7. Air spring according to Claim 6, **characterised in that** the telescopic device (30"") contains at least two elements (30a"", 30b"") which can be slid relative to one another with a longitudinal degree of freedom.

8. Air spring according to one of the preceding claims, **characterised in that** the evaluation device (18) is integrated into the bellows (8) and arranged on the cover (6).

9. Air spring according to one of the preceding claims, **characterised in that** the angle sensor (12) is arranged centrally or eccentrically with regard to the central axis (28) of the air spring (1).

10. Air spring according to one of the preceding claims, **characterised in that** the rotational element (14) of the angle sensor (12) interacts with the base (16) in a contactless fashion or by means of contact.

11. Air spring according to one of the preceding claims, **characterised in that** the rotational axis of the rotational element (14) of the rotational angle sensor (12) is arranged perpendicularly with respect to a central plane which contains the central axis (28) of the air spring (1).

12. Air suspension device for a vehicle containing at least one air spring (1) according to one of the preceding claims.

## Revendications

1. Ressort (1) pneumatique, comprenant un couvercle (4), un élément (6) de fond et un soufflet (8) souple, encastré d'une manière étanche à la pression entre eux, ainsi qu'un dispositif (10) de mesure du niveau intégré, au moins en partie, dans le soufflet (8), afin de détecter le niveau en hauteur du ressort (1) pneumatique, dans lequel le dispositif (10) de mesure de niveau a au moins ce qui suit :
a) au moins un capteur (12) d'angle, intégré au soufflet (8), au moins solidaire en rotation du couvercle (4) ou de l'élément (6) de fond et ayant un élément (14) tournant par rapport à une base (16),
b) un couplage (30, 30', 30'', 30''', 30'''') mécanique, relié d'une part à l'élément (14) tournant du capteur (12) d'angle et d'autre part au couvercle (4) ou à l'élément (6) de fond, de manière à ce qu'un angle (ω) d'au moins un élément (30, 30a', 30a'', 30a''', 30a'''') du couplage (30, 30', 30'', 30''', 30'''') mécanique se modifie avec une variation du niveau en hauteur du ressort (1) pneumatique et de manière à ce que le capteur (2) d'angle produise un signal d'angle en fonction de la variation angulaire de l'élément (30, 30a', 30a'', 30a''', 30a''''),
c) un dispositif (18) d'exploitation par lequel le signal d'angle, provenant du capteur (12) d'angle, est associé à un niveau en hauteur du ressort (1) pneumatique.

2. Ressort pneumatique suivant la revendication 1, **caractérisé en ce que** le couplage mécanique comporte au moins un élément (30) coulissant par l'une de ses extrémités dans un guidage (32) sur l'élément (6) de fond ou sur le couvercle (4) et relié par son autre extrémité à l'élément (14) tournant du capteur (12) d'angle, de manière à ce qu'avec une variation du niveau en hauteur du ressort (1) pneumatique, la une extrémité de l'élément (30) se déplace le long du guidage (32) et l'autre extrémité de l'élément (30) actionne l'élément (14) tournant du capteur (12) d'angle.

3. Ressort pneumatique suivant la revendication 2, **caractérisé en ce que** le guidage (32) est un guidage en longueur linéaire, monté dans un plan perpendiculaire à l'axe (28) médian du ressort (1) pneumatique.

4. Ressort pneumatique suivant la revendication 1, **caractérisé en ce que** le couplage mécanique comporte un mécanisme (30, 30a', 30a'', 30a''') de cisaillement, ayant au moins deux éléments (30a', 30b'; 30a" à 30d''; 30a''' à 30x''') de cisaillement articulés entre eux, dans lequel une extrémité d'un premier élément (30a'; 30a''; 30a'') de cisaillement est reliée à l'élément (14) tournant du capteur (12) d'angle et une extrémité d'un deuxième élément (30b'; 30d''; 30x''') de cisaillement est articulée par une articulation (36) à l'élément (6) de fond ou au couvercle (4), de manière à ce que, lorsqu'il se produit une variation du niveau en hauteur du ressort (1) pneumatique, le mécanisme (30'; 30''; 30''') de cisaillement s'allonge ou se raccourci, considéré dans la direction de l'axe (28) médian du ressort (1) pneumatique et de manière à ce que le deuxième élément (30b'; 30d''; 30x''') de cisaillement tourne autour de l'articulation (36) et de manière à ce que le premier élément (30a'; 30a''; 30a'') de cisaillement actionnement l'élément (14) de rotation du capteur (12) d'angle.

5. Ressort pneumatique suivant la revendication 4, **caractérisé en ce que** le mécanisme (30'; 30''; 30''') de cisaillement comporte des éléments de cisaillement s'entrecroisant et/ou ne s'entrecroisant pas.

6. Ressort pneumatique suivant l'une des revendications précédentes, **caractérisé en ce que** le couplage mécanique comporte un dispositif (30'''') télescopique articulé par l'une de ses extrémités au couvercle (4) ou à l'élément (6) de fond au moyen d'une articulation (36) et relié par son autre extrémité à l'élément (14) tournant du capteur (12) d'angle, de manière à ce que, lorsque le niveau en haute du ressort (1) pneumatique varie, par allongement ou raccourcissement du dispositif (30'''') télescopique, la une extrémité tourne autour de l'articulation (36) et l'autre extrémité actionne en rotation l'élément (14) de rotation du capteur (12) d'angle.

7. Ressort pneumatique suivant la revendication 6, **caractérisé en ce que** le dispositif (30'''') télescopique comporte au moins deux éléments (30a'''', 30b'''') coulissants l'un par rapport à l'autre avec un degré de liberté longitudinal.

8. Ressort pneumatique suivant l'une des revendications précédentes, **caractérisé en ce que** le dispositif (18) d'exploitation est intégré au soufflet (8) et est monté sur le couvercle (6).

9. Ressort pneumatique suivant l'une des revendications précédentes, **caractérisé en ce que** le capteur (12) d'angle est disposé de manière centrée ou excentrée par rapport à l'axe (28) médian du ressort (1) pneumatique.

10. Ressort pneumatique suivant l'une des revendications précédentes, **caractérisé en ce que** l'élément (14) tournant du capteur (12) d'angle coopère, sans contact ou avec contact, avec la base (16).

11. Ressort pneumatique suivant l'une des revendications précédentes, **caractérisé en ce que** l'axe de rotation de l'élément (14) tournant du capteur (12) d'angle est perpendiculaire à un plan médian, dans lequel passe l'axe (28) médian du ressort (1) pneumatique.

12. Dispositif de suspension pneumatique pour un véhicule, comportant au moins un ressort (1) pneumatique suivant l'une des revendications précédentes.
